# EUROPÄISCHE PATENTSCHRIFT

(11) **EP 1 842 400 B1**
(45) Veröffentlichungstag und Bekanntmachung des Hinweises auf die Patenterteilung: **03.06.2020**
(21) Anmeldenummer: 06702652.6
(22) Anmeldetag: 10.01.2006
(51) Int. Cl.: H05B 47/105

(54) **DIMMEN VON LEUCHTMITTELBETRIEBSGERÄTEN AUF VORAB DEFINIERTE PEGEL**
METHOD AND DEVICE FOR DIMMING LIGHTING CONTROL DEVICES TO A PREDEFINED LEVEL
VARIATION DE DISPOSITIFS DE COMMANDE DE MOYENS D'ÉCLAIRAGE À DES NIVEAUX PRÉDÉFINIS

(30) Priorität: 21.01.2005 DE 102005002973; 28.02.2005 DE 102005008996
(43) Veröffentlichungstag der Anmeldung: 10.10.2007
(60) Teilanmeldung: 11187222.2
(73) Patentinhaber: Tridonic GmbH & Co KG, 6851 Dornbirn (AT)
(72) Erfinder: JUEN, Reinhold, A-6850 Dornbirn (AT); MAIER, Joachim, A-6840 Götzis (AT)
(74) Vertreter: Rupp, Christian
(86) Internationale Anmeldenummer: PCT/EP2006/000144
(87) Internationale Veröffentlichungsnummer: WO 2006/077028

(56) Entgegenhaltungen:
- EP-A- 0 734 197
- US-A- 5 327 048
- US-A- 5 519 289
- US-A1- 2003 222 588

## Beschreibung

Die vorliegende Erfindung bezieht sich allgemein auf Verfahren und Geräte, mittels denen Leuchtmittel, wie beispielsweise LEDs, Gasentladungslampen, Hochdrucklampen etc. auf vorab definierte Dimmpegel (Dimmstufen) gesteuert und/oder geregelt werden können.

Im Bereich von Gasentladungslampen werden derartige elektronische Betriebsgeräte allgemein elektronisches Vorschaltgerät (EVG) genannt.

Es ist aus dem Stand der Technik bekannt, beispielsweise derartige elektronische Vorschaltgeräte (EVGs), um nur ein Beispiel für Leuchtmittelbetriebsgeräte zu nennen, über einen Digitalbus anzusteuern. Es wird diesbezüglich auf die Literatur im Zusammenhang mit dem sogenannten DALI (Digital Addressable Light Interface)- Standard verwiesen. Dabei werden also einem Leuchtmittelbetriebsgerät an einem Steuereingang digitale Signale zugeführt, die u.a. Dimm-Sollwerte vorgeben können.

Da ein Benutzer nicht immer gewillt ist, zu einem Leuchtmittelbetriebsgerät mit einer derartigen Digitalschnittstelle auch die zugehörige Buseinrichtung einschließlich digitalem Kontroller zu verwenden, sind aus dem Stand der Technik auch Betriebsgeräte bekannt, bei denen an einem derartigen digitalen Steuereingang (digitale Schnittstelle) wahlweise eben ein Digitalsignal oder aber auch ein mittels eines mit Netzspannung versorgten Tasters erzeugtes Signal angelegt werden kann. In diesem Fall kann also ein Benutzer, wenn er denn die digitale Peripherie nicht verwinden möchte, den Digitalsteuereingang des Betriebsgeräts mittels Tasterbetätigung ansteuern. Dabei wird bspw. die Zeitdauer sowie die Wiederholrate der Tasterbetätigung durch das angeschlossene Betriebsgerät als Signal zum Ein-/Ausschalten oder zum Dimmen ausgewertet.

Ein Beispiel für ein derartiges Betriebsgerät, an dessen digitalem Steuereingang auch ein von einem mit Netzspannung versorgten Taster oder Schalter herrührendes Signal anlegbar ist, ist beispielsweise in dem deutschen Gebrauchsmuster DE 297 24 657 angeführt.

Bekannt ist außerdem aus der US-Patentschrift 5,519,289 ein Vorschaltgerät für Gasentladungslampen, das eine frequenzabhängige Steuerschaltung aufweist. Dabei werden die Gasentladungslampen durch ein einziges Vorschaltgerät mit einer elektronisch geregelten Versorgung betrieben.

Weiterhin offenbart die Druckschrift DE 19757295 ein elektronisches Vorschaltgerät zum Betreiben mindestens einer Lampe, mit einer Anschlußvorrichtung, an die ein Lichtsensor zur Überwachung der Helligkeit eines bestimmten räumlichen Bereichs anschließbar ist, und mit einer Steuervorrichtung. Die Steuervorrichtung steuert bzw. regelt die Helligkeit der mindestens einen Lampe abhängig von einem von dem Lichtsensor gelieferten Helligkeits-Istwert. Weiterhin überprüft die Steuervorrichtung bei Inbetriebnahme des elektronischen Vorschaltgeräts automatisch den Anschluß des Lichtsensors an die Anschlußvorrichtung.

Ferner offenbart die internationale Norm IEC 60929, 2003 die Leistungsanforderungen für elektronische Vorschaltgeräte zur Verwendung an Wechselstromversorgungen bis 1000 V bei 50 Hz oder 60 Hz mit von der Versorgungsfrequenz abweichenden Betriebsfrequenzen für röhrenförmige Leuchtstofflampen nach IEC 60081 und IEC 60901 sowie für andere röhrenförmige Leuchtstofflampen für Hochfrequenzbetrieb.

Die vorliegende Erfindung stellt sich nunmehr die Aufgabe, die aus dem Bereich von Taster und Schalter gewonnene Erkenntnis, dass an einem Digital-Steuereingang eines Leuchtmittelbetriebsgeräts bei entsprechender Auslegung auch mittels einer Netzspannung erzeugte Signale angelegt werden können, auf andere Bereiche zu übertragen.

Die Erfindung hat dabei insbesondere erkannt, dass sich ein derartiger Ansatz auch auf den Bereich der Bewegungserkennung mittels eines Bewegungsmelders übertragen lässt.

Die genannte Aufgabe wird genauer gesagt durch die Merkmale der unabhängigen Ansprüche gelöst. Die abhängigen Ansprüche bilden den zentralen Gedanken der Erfindung in besonders vorteilhafter Weise weiter.

Erfindungsgemäß wird also ein Verfahren zur Ansteuerung von elektronisch gesteuerten Leuchtmittelbetriebsgeräten vorgeschlagen. Ein typischer Beispiel für ein derartiges Leuchtmittelbetriebsgerät ist ein elektronisches Vorschaltgerät (EVG) für Gasentladungslampen. Das Verfahren umfasst die folgenden Schritte:
Erkennen eines Anschlusses des Bewegungsmelders an das Leuchtmittelbetriebsgerät und nachfolgendes Umstellen eines Betriebs von einem Betrieb mit mehr als zwei vorgegebenen Dimmpegeln auf einem Betrieb mit nur zwei vorgegebenen Dimmpegeln,
Empfangen eines Ausgangssignals eines Bewegungsmelders und nachfolgendes Auswerten des Ausgangssignals, welches im Falle einer Erfassung einer Bewegung durch den Bewegungsmelder eine Versorgungsspannung des Bewegungsmelders ist,
Auswählen eines von den nur zwei vorgegebenen Dimmpegeln abhängig von dem Ausgangssignal des Bewegungsmelders,
Ansteuern eines an das elektronisch gesteuerte Leuchtmittelbetriebsgerät angeschlossenen Leuchtmittels auf den ausgewählten vorgegebenen Dimmpegel.

Der Steuereingang kann dabei so ausgebildet sein, dass an ihm wahlweise ein Digitalsignal oder ein Netzspannungssignal angelegt werden kann.

Gemäß einem weiteren Aspekt der vorliegenden Erfindung ist ein Verfahren zur Ansteuerung von elektronisch gesteuerten Leuchtmittelbetriebsgeräten vorgesehen, wobei vorab wenigstens zwei unterschiedliche Dimmstufen (Dimmpegel) in einem Leuchtmittelbetriebsgerät vorprogrammiert werden. Abhängig von einem Steuersignal, das dem Leuchtmittelbetriebsgerät zugeführt wird, werden dann selektiv eine der beiden Dimmstufen angesteuert. Beide Dimmstufen geben dabei eine Lichtleistung von mehr als 0% an.

Gemäß einem noch weiteren Aspekt der vorliegenden Erfindung ist ein Verfahren zur Ansteuerung von elektronisch gesteuerten Leuchtmittelbetriebsgeräten vorgesehen, wobei einer der nur zwei vorgegebenen Dimmpegel ein Ruhewert ist und der andere Dimmpegel der nur zwei vorgegebenen Dimmpegel ein vom Ruhewert verschiedener Betriebssollwert ist, der im Vergleich zum Ruhewert eine vergrößerte Lichtleistung des angeschlossenen Leuchtmittels angibt,
wobei für den Fall der Erfassung der Bewegung, ausgehend von dem Ruhewert, der Betriebsollwert als Dimmpegel ausgewählt wird, wobei der Ruhewert und/oder der Betriebssollwert programmierbar ist.

Der Betriebssollwert kann dabei automatisch während einer definierten Zeitdauer beibehalten werden, bevor wieder der Ruhewert angesteuert wird.

Der Ruhewert und/oder der Betriebssollwert können dabei einstellbar bzw. programmierbar sein.

Der Ruhewert kann dabei auf einen Wert von mehr als 0% Lichtleistung eingestellt werden.

Die Erfindung bezieht sich auch auf ein Computersoftware-Programmprodukt, das ein Verfahren der oben genannten Art unterstützt, wenn es auf einer Recheneinrichtung läuft bzw. wenn es durch Hartverdrahtung implementiert wird.

Die Erfindung bezieht sich auch auf ein Betriebsmittel für Leuchtmittel, das zur Durchführung eines derartigen Verfahrens ausgelegt ist.

Ein weiterer Aspekt der vorliegenden Erfindung bezieht sich auf Leuchtmittelbetriebsgerät, das einen Steuereingang aufweist. In dem Betriebsgerät sind dabei zwei unterschiedliche vorgegebene Dimmpegel abgelegt, die jeweils größer als 0% sind und auf die ein angeschlossenes Leuchtmittel abhängig von einem an den Steuereingang anliegenden Signal gesteuert und/oder geregelt wird, wobei das Leuchtmittelbetriebsgerät dazu ausgestaltet ist, bei einem Anschließen eines Bewegungsmelders von einem Betrieb mit kontinuierlichem Dimmbereich mit den mehr als zwei vorgegebenen Dimmpegeln auf einen Betrieb mit nur zwei vorgegebenen Dimmpegeln umzuschalten.

Der Steuereingang kann dabei derart ausgelegt sein, dass wahlweise ein digitales Signal mit einem ersten Spannungspegel oder ein von einer Netzspannung herstammendes Signal mit einem davon unterschiedlichen Pegel anlegbar ist. Beide genannten Signalarten können durch das Betriebsgerät ausgewertet und zur Ansteuerung eines angeschlossenen Leuchtmittels umgesetzt werden.

Die Erfindung bezieht sich auch auf ein System zur Ansteuerung von elektronisch gesteuerten

Leuchtmittelbetriebsgeräten, wobei das System einen mit einer Versorgungsspannung verbundenen Bewegungsmelder sowie ein Leuchtmittelbetriebsgerät aufweist. Das Leuchtmittelbetriebsgerät weist einen Steuereingang auf, dem ein Ausgangssignal des Bewegungsmelders zuführbar ist. Als Antwort auf eine durch den Bewegungsmelder erfasste Bewegung kann dabei das Leuchtmittelbetriebsgerät ein angeschlossenes Leuchtmittel automatisch auf eine höhere Lichtleistung ansteuern.

Ein noch weiterer Aspekt der vorliegenden Erfindung bezieht sich auf ein System zur Ansteuerung von Leuchtmitteln, das einen Bewegungsmelder sowie ein damit verbundenes Leuchtmittelbetriegsgerät aufweist. Das Leuchtmittelbetriebsgerät steuert ein angeschlossenes Leuchtmittel auf einen von dem Ruhewert verschiedenen Betriebssollwert, wenn von dem Bewegungsmelder eine Bewegung in einem definierten Raum erfasst wird. Der Betriebssollwert liegt dabei höher als ein Ruhewert.

Das Leuchtmittelbetriebsgerät kann insbesondere ein elektronisches Vorschaltgerät (EVG) sein.

Weitere Vorteile, Merkmale und Eigenschaften der vorliegenden Erfindung sollen nunmehr Bezug nehmend auf die einzige Figur der in der Anlage beigefügten Zeichnungen erläutert werden.
- Figur 1: zeigt ein erstes erfindungsgemäßes System zur Ansteuerung eines Leuchtmittels, und
- Figur 2: zeigt ein weiteres Ausführungsbeispiel, bei dem ein Bewegungsmelder mit einem Leuchtmittelbetriebsgerät über einen Digitalbus kommuniziert.

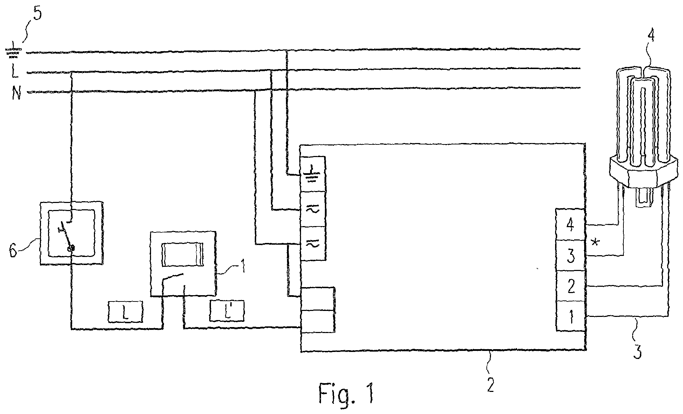

In Figur 1 sind schematisch dargestellt ein grundsätzlich bekannter Bewegungsmelder 1, ein elektronisches Vorschaltgerät (EVG) 2 sowie an dem Ausgang 3 des EVGs zwei angeschlossene Leuchtmittel 4. Es wurde bereits einführend darauf hingewiesen, dass das EVG 2 nur ein Beispiel für ein Betriebsgerät für Leuchtmittel darstellt und sich die vorliegende Erfindung zwanglos auf beliebige andere Leuchtmittel und somit über Gasentladungslampen hinaus anwenden läßt.

Das dargestellte EVG 2 weist drei Anschlüsse PE, L, N auf, die mit der Erde, der Phase sowie dem Nullleiter einer Spannungsversorgung 5 verbindbar sind.

Darüber hinaus weist das dargestellte EVG auch eine Schnittstelle mit zwei Anschlüssen D1, D2 auf. Diese Schnittstelle D1, D2 kann, wie sich bereits durch die Kurzbezeichnung der Anschlüsse ergibt, dazu ausgelegt sein, dass ihr digitales Signale beispielsweise gemäß dem DALI-Standard zugeführt werden, um somit dem EVG 2 Befehle zu übermitteln bzw. um an diesen Anschlüssen von dem EVG 2 aus Befehle an einen angeschlossenen Bus, wie beispielsweise dem DALI-Bus zu übermitteln, wenn eine bidirektionale Kommunikation vorgesehen ist.

Optional können also die Anschlüsse D1, D2 auch zur Entgegennahme von Digitalbefehlen mit nachfolgender Signalverarbeitung ausgebildet sein. Auf jeden Fall sind die Ansprüche D1, D2 so ausgebildet, dass an sie Signale angelegt werden können, die von einer Versorgungsspannung wie beispielsweise der Netzspannung herstammen. In dem dargestellten Beispiel ist der Anschluß D2 mit dem Nullleiter N der Spannungsversorgung 5 verbunden.

Zwischen dem anderen Signalsteuereingang D1 des EVGs 2 und dem Phasenleiter L der Spannungsversorgung 5 ist ein handelsüblicher Bewegungsmelder 1 geschaltet (die Funktion des ebenfalls dazwischen geschalteten optionalen Timers 6 wird später erläutert werden). Diesem Bewegungsmelder 1 wird also eingangsseitig die Phase L der Versorgungsspannung 5 zugeführt. Das Ausgangssignal des Bewegungsmelders 1, das also dem Steuereingang D1 des EVGs 2 zugeführt wird, wird mit L' bezeichnet.

An dem Steuereingang D1 können also im wesentlichen zwei unterschiedliche Signale anliegen, nämlich eines für den Fall der Erfassung einer Bewegung durch den Bewegungsmelder 1 sowie ein davon unterschiedliches Signal für den Fall, dass der Bewegungsmelder 1 keine Bewegung erkennt.

Insbesondere können diese beiden Signalzustände, die dem Ausgangssignal des Bewegungsmelder entsprechen, wie folgt definiert sein:
Bei Erfassung einer Bewegung durch den Bewegungsmelder 1 schließt dieser die Verbindung zwischen dem Phasenleiter L und dem Steuereingang D1, so dass an dem Steuereingang D1 der Signalpegel des Phasenleiters L anliegt. In dem EVG 2 ist vorab ein definierter Dimmpegel abgelegt, der durch das EVG 2 angesteuert wird, wenn durch Anliegen des Phasenleiters L an dem Steuereingang D1 das Erkennen einer Bewegung durch den Bewegungsmelder 1 wiedergegeben wird.

Andererseits, wenn der Bewegungsmelder 1 keine Bewegung in den von ihm überwachten Bereich erkennt, ist gemäss diesem Ausführungsbeispiel die Verbindung zwischen dem Steuereingang D1 und dem Phasenleiter L der Spannungsversorgung 5 getrennt, so dass an dem Steuereingang D1 keine Spannung anliegt. Für diesen Fall, der also durch das EVG 2 als Nichterkennen einer Bewegung interpretiert werden kann, kann in dem EVG 2 ein zweiter Dimmwert vorprogrammiert sein, der im folgenden Ruhewert entsprechend der Nichterkennung einer Bewegung bezeichnet werden wird. Dieser Ruhewert kann insbesondere ein im Vergleich zu dem Betriebssollwert im Falle einer Erkennung einer Bewegung niedriger Dimmpegel sein.

Ein typischer Anwendungsfall für ein derartiges System zur Ansteuerung von Leuchtmitteln sind beispielsweise Treppenhäuser oder Flure. In vorteilhafter Weise sind dabei neben dem Leuchtmittelbetriegsgerät und dem Bewegungsmelder keine weiteren Steuereinheiten notwendig.

Wenn durch den Bewegungsmelder 1 eine Bewegung erkannt wird und dadurch beispielsweise die Netzspannung an dem Steuereingang D1 des EVGs 2 anliegt, kann dieses beispielsweise ein angeschlossenes Leuchtmittel automatisch auf 100% Lichtleistung ansteuern. Wenn andererseits keine Bewegung erkannt wird, und somit an dem Steuereingang D1 das Signal '0' anliegt (spannungslos), kann auf einen niedrigeren Wert wie beispielsweise 5% Lichtleistung gesteuert werden.

Wenn also der Bewegungsmelder die Anwesenheit einer Person beispielsweise in einem Treppenhaus erkennt, wird automatisch das Treppenhaus mit einer ausreichenden Lichtleistung, bspw. 100%, beleuchtet.

Nach einer vorbestimmten Zeitdauer, die beispielsweise in dem EVG 2 programmiert oder eingestellt sein kann, oder aber der (wiederum ggf. Einstellbaren) Verzögerungszeit des Bewegungsmelders 1 nach Erkennung einer Bewegung entspricht, unterbricht der Bewegungsmelder wieder die Verbindung mit der Steuerphase L. Somit wird das angeschlossene Leuchtmittel wieder auf den Ruhewert angesteuert, der einem wesentlich niedrigeren Niveau im Vergleich zu dem Betriebssollwert entspricht.

Wie gesagt, sowohl der Ruhewert wie auch der Betriebssollwert bei Erkennung einer Bewegung können an dem EVG 2 einstellbar bzw. programmierbar sein.

Es kann weiterhin vorgesehen sein, dass neben dem Bewegungsmelder auch ein Zeitgeber (Timer) 6 vorgeschaltet ist, der Nutzungszeiträume vorgibt (beispielsweise morgens, abends, Dämmerung, etc.) in denen die Funktion des Bewegungsmelders aktiv geschaltet ist. Nur innerhalb des Nutzungszeitraums verbindet also der Timer die Steuerphase L mit dem Bewegungsmelder, so dass nur während des Nutzungszeitraums der Bewegungsmelder wiederum eine Verbindung zwischen dem Steuereingang D1 und der Steuerphase L herstellen kann.

Diese Nutzungszeiträume können indessen bspw. auch in dem Betriebsgerät oder in dem Bewegungsmelder selbst eingestellt sein.

Die Einstellung der beiden Dimmpegel (Ruhewert, Betriebssollwert) kann über beispielsweise über eine Schnittstelle erfolgen. Dies kann im Betrieb, während der Installation, während der Fertigung etc. ausgeführt werden. Die Schnittstelle kann auch drahtlos ausgebildet sein.

Das EVG kann auch dazu ausgebildet sein, automatisch den Anschluß eines Bewegungsmelders zu erkennen. Dies ist beispielsweise dann vorteilhaft, wenn das EVG ein solches mit kontinuierlichem Dimmbereich bzw. quasi kontinuierlichem Dimmbereich von beispielsweise 1% bis 100% ist, das bei Erkennen des Anschlusses eines Bewegungsmelders an den Anschlüssen D1, D2 automatisch auf einen 2-Dimmlevel-Betrieb umschaltet.

Ein typischer Anwendungsfall ist also das Erkennen von Personen zu bestimmten Zeitdauern (Morgenstunden, Abendstunden) in einem Treppenhaus etc.

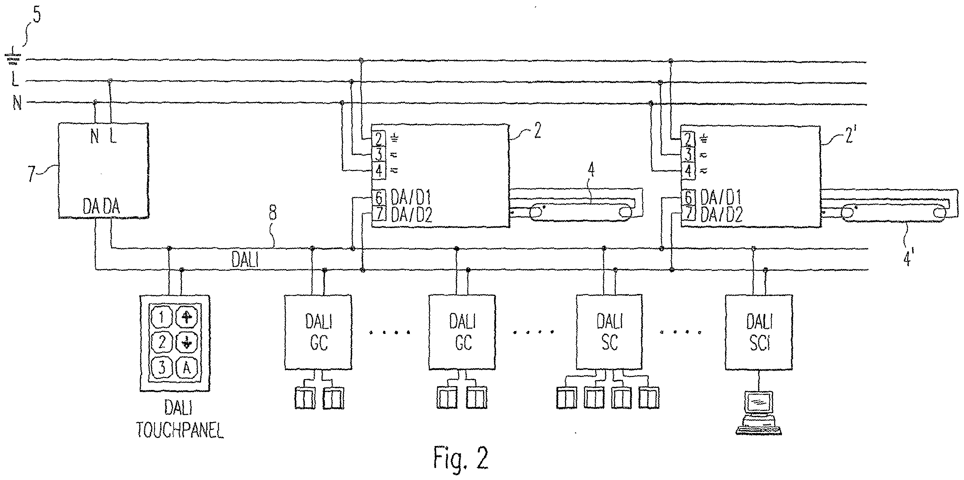

In Figur 2 ist dargestellt, dass ein Bewegungsmelder 7 auch Element eines digitalen Bussystems (bspw. gemäss dem DALI-Standard) sein kann. In diesem Fall kann der Bewegungsmelder 7 angeschlossenen Betriebsgeräten 2, 2' über eine Busleitung 8 die Information der Erfassung einer Bewegung in Form eines Digitalsignals übermitteln. Diese Information kann, wie bspw. bei dem DALI-Standard vorgesehen, adressiert sein und ein bzw. eine Gruppe von angeschlossenen Betriebsgeräten mit Leuchtmitteln 4, 4' mit der entsprechenden Adresse ansprechen.

Zusätzlich können natürlich auch bspw. die im DALI-System üblichen digitalen Controller (DALI GC, DALI SC), Bedienelemente (DALI Touchpanel) und Schnittstellen (DALI SCI) angeschlossen sein. Über diese Schnittstellen kann bspw. eine Programmierung der oben beschriebenen Pegel und Zeitdauern erfolgen.

## Patentansprüche

1. Verfahren zum Betreiben eines elektronisch gesteuerten Leuchtmittelbetriebsgeräten, wobei das Verfahren die folgenden Schritte aufweist:
• Empfangen eines Ausgangssignals eines Bewegungsmelders (1, 7) und nachfolgendes Auswerten des Ausgangssignals, welches im Falle einer Erfassung einer Bewegung durch den Bewegungsmelder (1,7) eine Versorgungsspannung des Bewegungsmelders (1,7) ist,
• Auswählen eines von den nur zwei vorgegebenen Dimmpegeln abhängig von dem Ausgangssignal des Bewegungsmelders (1,7),
• Ansteuern eines an das elektronisch gesteuerte Leuchtmittelbetriebsgerät angeschlossenen Leuchtmittels auf den ausgewählten vorgegebenen Dimmpegel,
**dadurch gekennzeichnet, dass**
vor dem Schritt des Empfangens das Verfahren den folgenden Schritt umfasst:
• Erkennen eines Anschlusses des Bewegungsmelders (1, 7) an das Leuchtmittelbetriebsgerät und nachfolgendes Umstellen eines Betriebs von einem Betrieb mit mehr als zwei vorgegebenen Dimmpegeln auf einem Betrieb mit nur zwei vorgegebenen Dimmpegeln,

2. Verfahren nach Anspruch 1,
wobei wenigstens einer der vorgegeben Dimmpegel einstellbar oder programmierbar ist.

3. Verfahren nach Anspruch 1 oder 2,
wobei das Ausgangssignal des Bewegungsmelders (1, 7) an einem Steuereingang (D1) des Betriebsgeräts (2, 2') erfasst wird, der getrennt von einer Spannungsversorgung (5) des Leuchtmittelbetriebsgeräts vorgesehen ist.

4. Verfahren nach Anspruch 3,
wobei an dem Steuereingang (D1) wahlweise ein Digitalsignal oder ein von einer Versorgungsspannung, insbesondere einer Netzspannung herstammendes Signal, angelegt sein kann.

5. Verfahren nach Anspruch 1, wobei einer der nur zwei vorgegebenen Dimmpegel ein Ruhewert ist und der andere Dimmpegel der nur zwei vorgegebenen Dimmpegel ein vom Ruhewert verschiedener Betriebssollwert ist, der im Vergleich zum Ruhewert eine vergrößerte Lichtleistung des angeschlossenen Leuchtmittels (4, 4') angibt, wobei für den Fall der Erfassung der Bewegung, ausgehend von dem Ruhewert, der Betriebsollwert als Dimmpegel ausgewählt wird, wobei der Ruhewert und/oder der Betriebssollwert programmierbar ist.

6. Verfahren nach Anspruch 5,
wobei der Betriebssollwert während einer definierten Zeitdauer beibehalten wird, bevor wieder der Ruhewert als Dimmpegel angesteuert wird.

7. Verfahren nach Anspruch 6,
wobei die definierte Zeitdauer der Beibehaltung des Betriebssollwerts einstellbar oder programmierbar ist.

8. Verfahren nach einem der Ansprüche 6 bis 7,
wobei der Ruhewert und/oder der Betriebssollwert einstellbar sind.

9. Verfahren nach einem der Ansprüche 6 bis 8,
wobei der Ruhewert auf einen Wert von mehr als 0% Lichtleistung eingestellt ist.

10. Computersoftware-Programmprodukt,
**dadurch gekennzeichnet,**
**dass** es ein Verfahren nach einem der vorhergehenden Ansprüche unterstützt, wenn es auf einer Recheneinrichtung eines Betriebsgeräts (2, 2') läuft.

11. Betriebsmittel für Leuchtmittel (4, 4'),
**dadurch gekennzeichnet,**
**dass** es zur Durchführung eines Verfahrens nach einem der Ansprüche 1 bis 9 ausgelegt ist.

12. Leuchtmittelbetriebsgerät, aufweisend einen Steuereingang (D1), wobei in dem Leuchtmittelbetriebsgerät mehr als zwei unterschiedliche vorgegebene Dimmpegel abgelegt sind, die jeweils größer als 0% sind und auf die ein angeschlossenes Leuchtmittel (4, 4') abhängig von einem an dem Steuereingang (D1) anliegenden Signal gesteuert und/oder geregelt wird,
**dadurch gekennzeichnet, dass**
das Leuchtmittelbetriebsgerät dazu ausgestaltet ist, bei einem Anschließen eines Bewegungsmelders (1, 7) von einem Betrieb mit kontinuierlichem Dimmbereich mit den mehr als zwei vorgegebenen Dimmpegeln auf einen Betrieb mit nur zwei vorgegebenen Dimmpegeln umzuschalten.

13. Leuchtmittelbetriebsgerät nach Anspruch 12,
bei dem wenigstens einer der Dimmpegel einstellbar oder programmierbar ist.

14. Leuchtmittelbetriebsgerät nach Anspruch 12 oder 13,
das derart ausgestaltet ist, dass an den Steuereingang (D1) wahlweise ein digitales Signal mit einem ersten Spannungspegel oder ein von einer Netzspannung herstammendes Signal mit einem davon unterschiedlichen Pegel anlegbar ist und dass beide genannten Signalarten von dem Leuchtmittelbetriebsgerät zur Ansteuerung des angeschlossenen Leuchtmittels (4, 4') umsetzbar sind.

## Claims

1. A method for operating an electronically controlled lighting means operating device, wherein the method has the following steps:
• Receiving an output signal of a motion detector (1, 7) and subsequently evaluating the output signal, which in the event of a detection of a movement by the motion detector (1, 7) is a supply voltage of the motion detector (1, 7),
• selecting one of the only two predetermined dimming levels depending on the output signal of the motion detector (1, 7),
• controlling a lighting means connected to the electronically controlled lighting means operating device to the selected predetermined dimming level,
**characterized in that** before the step of receiving the method comprises the following step:
• Detecting a connection of the motion detector (1, 7) to the lighting means operating device and subsequently switching an operation from an operation with more than two predetermined dimming levels to an operation with only two predetermined dimming levels.

2. The method according to Claim 1,
wherein at least one of the predetermined dimming levels can be set or can be programmed.

3. The method according to Claim 1 or 2,
wherein the output signal of the motion detector (1, 7) is detected at a control input (D1) of the operating device (2, 2'), which is provided separate from a voltage supply (5) of the lighting means operating device.

4. The method according to Claim 3,
wherein a digital signal or a signal originating from a supply voltage, in particular, from a mains voltage, can be selectively applied to the control input (D1).

5. The method according to Claim 1,
wherein one of the only two predetermined dimming levels is a rest value and the other dimming level of the only two predetermined dimming levels is an operating target value different from the rest value, which in comparison to the rest value indicates an enlarged light output of the connected lighting means (4, 4'), wherein in the event of the detection of the movement, based on the rest value, the operating target value is selected as the dimming level, wherein the rest value and/or the operating target value can be programmed.

6. The method according to Claim 5,
wherein the operating target value is maintained during a defined time period, before the rest value is controlled again as the dimming value.

7. The method according to 6,
wherein the defined time period of the maintenance of the operating target value can be set or can be programmed.

8. The method according to any one of Claims 6 to 7,
wherein the rest value and/or the operating target value can be set.

9. The method according to any one of Claims 6 to 8,
wherein the rest value is set to a value of more than 0% light output.

10. A computer software program product,
**characterized in**
**that** it supports a method according to any one of the preceding claims, when it runs on a computing device of an operating device (2, 2').

11. An operating means for lighting means (4, 4'),
**characterized in**
**that** it is designed for implementing a method according to any one of Claims 1 to 9.

12. A lighting means operating device, having a control input (D1),
wherein in the lighting means operating device more than two different predetermined dimming levels are stored, which in each case are greater than 0% and to which a connected lighting means (4, 4') is controlled and/or regulated depending on a signal present at the control input (D1),
**characterized in that**
the lighting means operating device is designed to switch when a motion detector (1, 7) is connected from an operation with a continuous dimming range with the more than two predetermined dimming levels to an operation with only two predetermined dimming levels.

13. The lighting means operating device according to Claim 12,
in which at least one of the dimming levels can be set or can be programmed.

14. The lighting means operating device according to Claim 12 or 13,
which is designed in such a manner that a digital signal with a first voltage level or a signal originating from a mains voltage with a level different therefrom can be selectively applied to the control input (D1) and that both mentioned types of signal can be implemented by the lighting means operating device for controlling the connected lighting means (4, 4').

## Revendications

1. Procédé pour faire fonctionner un appareil de fonctionnement de moyens d'éclairage commandé électroniquement, le procédé comportant les étapes suivantes :
• réception d'un signal de sortie d'un détecteur de mouvement (1, 7) et ensuite analyse du signal de sortie qui est une tension d'alimentation du détecteur de mouvement (1, 7) en cas de détection d'un mouvement par le détecteur de mouvement (1, 7),
• sélection d'un niveau d'atténuation parmi les seulement deux niveaux d'atténuation prescrits en fonction du signal de sortie du détecteur de mouvement (1, 7),
• pilotage d'un moyen d'éclairage connecté à l'appareil de fonctionnement de moyens d'éclairage commandé électroniquement pour le conduire au niveau d'atténuation prescrit sélectionné,
**caractérisé en ce que,**
avant l'étape de réception, le procédé comprend l'étape suivante :
• identification d'une connexion du détecteur de mouvement (1, 7) à l'appareil de fonctionnement de moyens d'éclairage et ensuite commutation d'un fonctionnement à partir d'un fonctionnement avec plus de deux niveaux d'atténuation prescrits vers un fonctionnement avec seulement deux niveaux d'atténuation prescrits.

2. Procédé selon la revendication 1, au moins un des niveaux d'atténuation prescrits pouvant être réglé ou programmé.

3. Procédé selon la revendication 1 ou 2,
le signal de sortie du détecteur de mouvement (1, 7) étant détecté au niveau d'une entrée de commande (D1) de l'appareil de fonctionnement (2, 2') qui est prévue séparément d'une alimentation en tension (5) de l'appareil de fonctionnement de moyens d'éclairage.

4. Procédé selon la revendication 3,
au choix un signal numérique ou un signal en provenance d'une tension d'alimentation, en particulier d'une tension du secteur, pouvant être appliqué au niveau de l'entrée de commande (D1).

5. Procédé selon la revendication 1, un des seulement deux niveaux d'atténuation prescrits étant une valeur au repos, et l'autre niveau d'atténuation des seulement deux niveaux d'atténuation prescrits étant une valeur de consigne de fonctionnement, différente de la valeur au repos, qui, comparée à la valeur au repos, indique une puissance lumineuse accrue du moyen d'éclairage (4, 4') connecté, la valeur de consigne de fonctionnement étant sélectionnée en tant que niveau d'atténuation en cas de détection du mouvement, à partir de la valeur au repos, la valeur au repos et/ou la valeur de consigne de fonctionnement pouvant être programmée.

6. Procédé selon la revendication 5,
la valeur de consigne de fonctionnement étant maintenue pendant une durée de temps définie avant que la valeur au repos soit de nouveau pilotée en tant que niveau d'atténuation.

7. Procédé selon la revendication 6,
la durée définie du maintien de la valeur de consigne de fonctionnement pouvant être réglée ou programmée.

8. Procédé selon l'une des revendications 6 à 7,
la valeur au repos et/ou la valeur de consigne de fonctionnement pouvant être réglées.

9. Procédé selon l'une des revendications 6 à 8,
la valeur au repos pouvant être réglée à une valeur supérieure à 0% de puissance lumineuse.

10. Produit de programme logiciel informatique,
**caractérisé en ce**
**qu'**il soutient un procédé selon l'une des revendications précédentes quand il tourne sur un équipement de calcul d'un appareil de fonctionnement (2, 2').

11. Moyen de fonctionnement pour moyens d'éclairage (4, 4'),
**caractérisé en ce**
**qu'**il est conçu pour la réalisation d'un procédé selon l'une des revendications 1 à 9.

12. Appareil de fonctionnement de moyens d'éclairage, comportant une entrée de commande (D1), plus de deux niveaux d'atténuation prescrits différents étant enregistrés dans l'appareil de fonctionnement de moyens d'éclairage et étant respectivement supérieurs à 0 %, et auxquels un moyen d'éclairage (4, 4') connecté est commandé et/ou réglé en fonction d'un signal présent sur l'entrée de commande (D1),
**caractérisé en ce que**
l'appareil de fonctionnement de moyens d'éclairage est constitué pour, lors d'une connexion d'un détecteur de mouvement (1, 7), commuter à partir d'un fonctionnement ayant une plage d'atténuation continue avec les plus de deux niveaux d'atténuation prescrits vers un fonctionnement avec seulement deux niveaux d'atténuation prescrits.

13. Appareil de fonctionnement de moyens d'éclairage selon la revendication 12,
dans lequel au moins un des niveaux d'atténuation peut être réglé ou programmé.

14. Appareil de fonctionnement de moyens d'éclairage selon la revendication 12 ou 13,
qui est constitué de telle sorte qu'au choix un signal numérique ayant un premier niveau de tension ou un signal en provenance d'une tension du secteur ayant un niveau qui en diffère peut être appliqué à l'entrée de commande (D1), et en ce que les deux types de signaux cités peuvent être mis en œuvre par l'appareil de fonctionnement de moyens d'éclairage afin de piloter le moyen d'éclairage (4, 4') connecté.
